# FASCICULE DE BREVET EUROPEEN

(11) **EP 1 681 494 B1**
(45) Date de publication et mention de la délivrance du brevet: **05.09.2007**
(21) Numéro de dépôt: 05292814.0
(22) Date de dépôt: 29.12.2005
(51) Int. Cl.: F16H 55/28, B62D 3/12

(54) **Poussoir de guidage d'une barre de crémaillère**
Druckstück zur Führung einer Zahnstange
Pressure yoke for guiding a rack

(30) Priorité: 17.01.2005 FR 0500443
(43) Date de publication de la demande: 19.07.2006
(73) Titulaire: Ardepa, 91630 Guibeville (FR)
(72) Inventeur: Paris, Bertrand, 91290 Arpajon (FR); De Pretto, Alain 1 rue du Haras, 91240 Saint-Michel-sur-Orge (FR)
(74) Mandataire: Flavenot, Bernard

(56) Documents cités:
- DE-A1- 10 107 740
- DE-A1- 10 247 331
- FR-A- 2 857 425
- GB-A- 2 013 304
- US-B1- 6 178 843
- PATENT ABSTRACTS OF JAPAN vol. 2002, no. 07, 3 juillet 2002 (2002-07-03) -& JP 2002 087289 A (OILES IND CO LTD), 27 mars 2002 (2002-03-27)
- PATENT ABSTRACTS OF JAPAN vol. 2003, no. 06, 3 juin 2003 (2003-06-03) -& JP 2003 040116 A (KOYO SEIKO CO LTD), 13 février 2003 (2003-02-13)

## Description

La présente invention concerne les poussoirs de guidage d'une barre de crémaillère ou analogue comme celle que l'on trouve dans les commandes de direction des véhicules automobiles.

Notamment par les FR-A-2 761 037 et FR-A-2 857 425, qui montre toutes les caractéristiques du préambule de la revendication 1, il est déjà connu des mécanismes d'accouplement d'une crémaillère et de son pignon d'entraînement, comportant au moins un poussoir.

Le problème qui se pose pour ce genre de dispositifs est le fait qu'ils doivent être produits en grande quantité à un prix de fabrication le plus faible possible, tout en bénéficiant des performances des réalisations plus onéreuses.

Aussi, la présente invention a-t-elle pour but de réaliser un poussoir de guidage d'une barre de crémaillère ou analogue, qui tente de concilier toutes les conditions évoquées ci-dessus.

Plus précisément, la présente invention a pour objet un poussoir de guidage d'une barre de crémaillère ou analogue, lorsque la barre de crémaillère présente au moins une portion de surface latérale convexe cylindrique de révolution de rayon R et que cette barre est apte à se déplacer en translation le long et/ou en rotation autour de son axe de révolution, ledit poussoir comportant:
- une embase,
- un piston comportant un corps de piston,
- un patin comportant une surface de guidage de forme sensiblement hémi cylindrique de révolution concave comportant au moins une partie de forme sensiblement complémentaire de ladite portion de surface latérale de la barre de crémaillère,
- des moyens pour associer ledit patin avec ledit piston, et
- des moyens pour exercer une force élastique entre ladite embase et ledit corps de piston de façon que la surface de guidage du patin soit apte à rester constamment en contact avec ladite portion de surface latérale de la barre de crémaillère,
   ledit patin étant constitué d'une feuille d'un matériau à faible coefficient de frottement conformée de façon que la surface de guidage concave comporte une première zone centrale sensiblement cylindrique de rayon R relativement rigide sensiblement centrée au sommet polaire de ladite forme sensiblement hémi cylindrique de révolution concave, deux deuxième et troisième zones latérales de rayon R relativement rigides situées sensiblement symétriquement l'une de l'autre par rapport au plan polaire diamétral passant par le sommet polaire,

- et deux quatrième et cinquième zones de liaison relativement souples reliant respectivement les deuxième et troisième zones latérales avec la première zone centrale.

D'autres caractéristiques et avantages de l'invention apparaîtront au cours de la description suivante donnée en regard des dessins annexés à titre illustratif mais nullement limitatif, dans lesquels :
Les figures 1A, 1B et 1C représentent, respectivement en vue de face, en coupe longitudinale et en perspective, un mode de réalisation avantageux d'un poussoir selon l'invention, la figure 1B étant une coupe dans le plan de la figure 1 A, et
Les figures 2A, 2B et 2C représentent, respectivement en perspective, en vue de dessus et en vue de côté, un mode de réalisation avantageux d'un élément constitutif de la structure du poussoir selon les figures 1A à 1C.

Il est tout d'abord précisé que, sur les figures, les mêmes références désignent les mêmes éléments, quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est aussi précisé que les figures représentent essentiellement un seul mode de réalisation de l'objet selon l'invention, mais qu'il peut exister d'autres modes de réalisation qui répondent à la définition de cette invention.

Le poussoir selon l'invention permet de guider une barre de crémaillère ou analogue, lorsque la barre de crémaillère 1 présente au moins une portion de surface latérale 12 convexe cylindrique de révolution de rayon R et que cette barre est apte à se déplacer en translation le long et/ou en rotation autour de son axe de révolution 2.

Le poussoir comporte essentiellement, une embase 3, un piston 4 comportant un corps de piston 5, un patin 6 comportant une surface de guidage 8 de forme sensiblement hémi cylindrique de révolution concave comportant au moins une partie de forme sensiblement complémentaire de la portion de surface latérale 12 de la barre de crémaillère 1, des moyens pour associer ce patin avec le piston 4, et des moyens 10 pour exercer une force élastique entre l'embase 3 et le corps de piston 5 de façon que la surface de guidage 8 du patin 6 soit apte à rester constamment en contact avec la portion de surface latérale 12 de la barre de crémaillère 1.

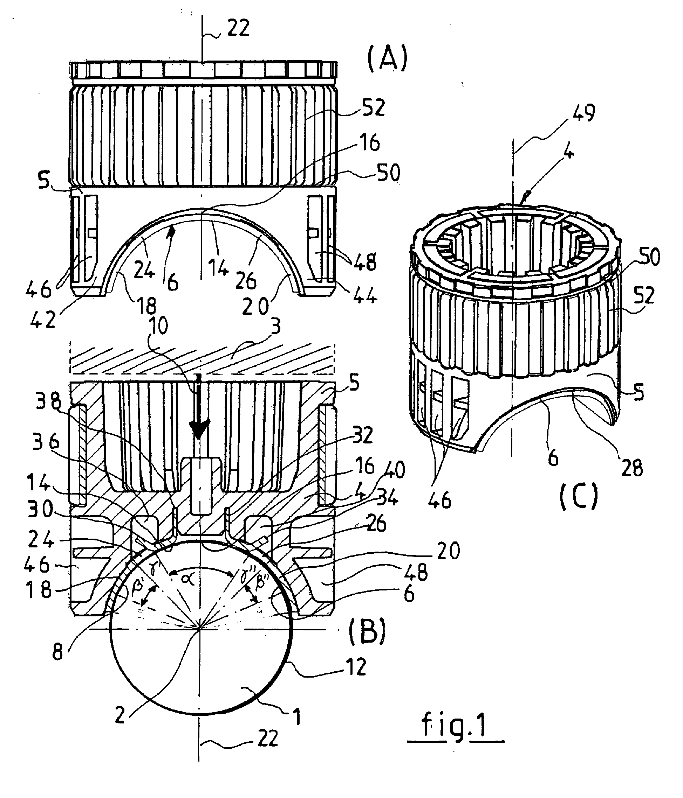

L'embase 3 n'a été représentée que schématiquement sur la figure 1 B car elle est bien connue en elle-même. Elle sera par exemple du même type que celles de l'art antérieur et ne sera pas plus amplement décrite ici.

Il en est de même pour les moyens 10 pour exercer une force élastique entre l'embase 3 et le corps de piston 5, qui sont par exemple constitués par un ressort métallique de type hélicoïdal ou analogue.

Selon une caractéristique de l'invention, le poussoir se caractérise par le fait que le patin 6 est constitué d'une feuille d'un matériau à faible coefficient de frottement conformée de façon que la surface de guidage concave 8 comporte, comme illustré plus particulièrement sur la figure 1 B, une première zone centrale 14 sensiblement cylindrique de rayon R relativement rigide et sensiblement centrée au sommet polaire 16 de la forme sensiblement hémi cylindrique de révolution concave, deux deuxième 18 et troisième 20 zones latérales de rayon R relativement rigides situées sensiblement symétriquement l'une de l'autre par rapport au plan polaire diamétral 22 passant par le sommet polaire 16, et deux quatrième 24 et cinquième 26 zones de liaison relativement souples, et donc élastiques, reliant respectivement les deuxième et troisième zones latérales 18, 20 avec la zone centrale 14.

Dans un mode de réalisation avantageux, le corps de piston 5 est réalisé en un matériau ayant un coefficient d'élasticité supérieur à celui de la matière dans laquelle est réalisée la feuille constituant le patin 6, et la feuille est implantée dans une cavité 28 de forme générale sensiblement hémi cylindrique complémentaire de la face convexe de cette feuille, la cavité étant réalisée dans le corps de piston.

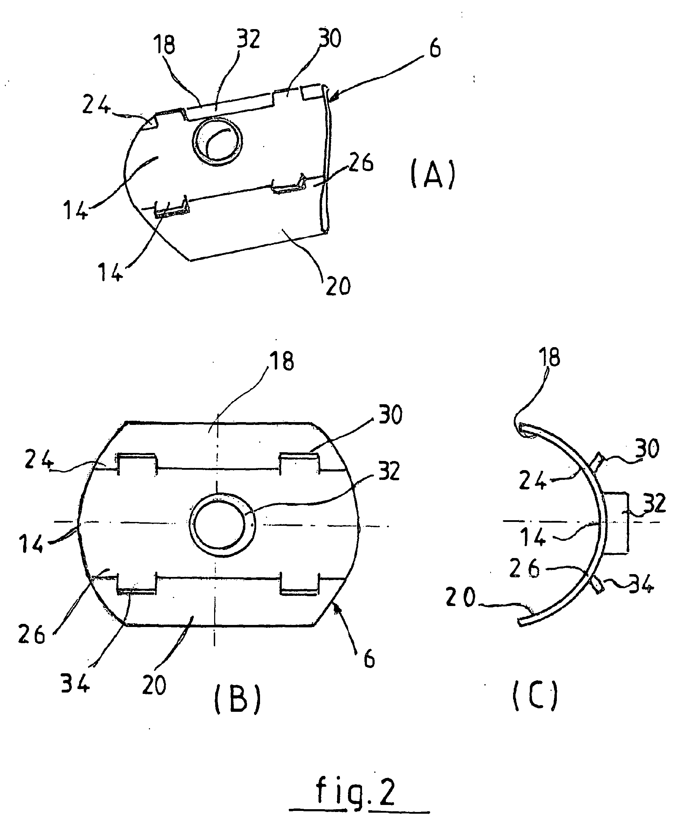

Dans une réalisation préférentielle, les deux zones de liaison souples 24, 26 sont constituées par des portions évidées de la feuille, comme visible sur les figures 1 B et 2A à 2C.

Dans un autre mode de réalisation qui n'a pas été illustré dans l'unique souci de simplifier les dessins, il est cependant possible que les deux zones de liaison souples 24, 26 soient constituées par des portions amincies de la feuille.

Quant aux moyens pour associer le patin 6 avec le piston 4 mentionnés auparavant, ils sont de préférence constitués par des moyens pour fixer le patin avec le piston. Avantageusement, ces moyens sont constitués par au moins une patte, 30, 32, 34 (cinq sont visibles sur les figures 2A et 2B) solidaire du patin 6 en déport de celui-ci et un logement 36, 38, 40 réalisé dans le piston, la patte et le logement étant agencés l'un par rapport à l'autre de façon que, lorsque le patin 6 est positionné dans la cavité 28, la patte 30, 32, 34 s'enfiche en force dans le logement pour, par exemple, s'y coincer.

Selon une réalisation avantageuse, la patte est obtenue, comme les pattes 30 et 34, par une découpe sensiblement en U dans la feuille, la découpe étant ensuite partiellement pliée pour former la patte en déport.

Il est cependant possible que les pattes soient obtenues par déformation par emboutissage de la feuille, comme la patte 32.

De plus, de façon très préférentielle, les parties 42, 44 du corps de piston 5 bordant les deuxième et troisième zones latérales 18, 20 comportent des évidements 46, 48 qui leur donnent une souplesse supérieure à celle des parties restantes du corps de piston.

Il est aussi avantageux que, comme illustré, le corps de piston 5 présente une forme sensiblement cylindrique de révolution dont l'axe de révolution 49 est sensiblement contenu dans le plan polaire 22 défini ci-dessus.

Il est aussi prévu une gorge circulaire 50 réalisée dans la paroi latérale cylindrique de révolution du corps de piston 5 et une bague annulaire 52 en un matériau présentant un coefficient d'élasticité supérieur à celui du matériau dans lequel est réalisé le corps de piston, la bague annulaire ayant une épaisseur supérieure à la profondeur de la gorge et étant positionnée dans la gorge en étant centrée sur l'axe de révolution 49 du corps de piston.

Il est avantageux que le matériau dans lequel est réalisé le corps de piston 5 soit une matière plastique comme du polyester ou analogue, et que la feuille soit une feuille de bronze chargé d'un élément dopant, par exemple du PTFE ou analogue, tendant à diminuer le coefficient de frottement.

Dans une réalisation qui a donné de bons résultats, pour une barre de crémaillère 1 d'environ deux centimètres de diamètre, la zone centrale 14 était définie sur un angle au centre α d'environ cinquante degrés, les deux zones de liaison 24, 26 étaient définies chacune sur un angle au centre γ' et γ" d'environ quinze degrés et les deux zones latérales 18, 20 étaient définies chacune sur un angle au centre β' et β" d'environ vingt degrés.

Le poussoir selon l'invention dont la structure a été décrite ci-dessus présente des avantages certains, notamment les avantages suivants:
La zone centrale 14 et les deux zones latérales 18, 20 constituent en fait, pour la barre de crémaillère, un référentiel de trois points d'appui (ou groupe de trois points) qui s'adaptent en fonction des défauts notamment d'usinage inévitables de la barre de crémaillère 1 et du patin 6.
Les déplacements parasites de la barre de crémaillère 1 dans le plan polaire diamétral 22 sont compensés par le déplacement du corps de piston 5 par rapport à l'embase 3 et sont absorbés par les moyens élastiques 10. Les déplacements latéraux de la barre, c'est-à-dire perpendiculairement au plan polaire diamétral 22 et à l'axe de révolution 2 de la barre, sont compensés par des rotations (en réalité de faibles amplitudes) des zones latérales 18, 20 par rapport à la zone centrale 14, et ce, grâce aux zones de liaison souples 24, 26.
De cette façon, la barre est constamment maintenue et, par exemple, ne vibre pas et ne subit pas des chocs ou analogues qui engendrent des bruits bien connus des techniciens.
Les deux zones latérales 18, 20 sont maintenues élastiquement sur la surface latérale 12 de la barre 1 grâce aux zones de liaison souples 24, 26 et aux deux parties 42, 44 évidées du corps de piston 5 qui présentent une certaine élasticité et tendent encore plus à maintenir les deux zones latérale 18, 20 au contact de la surface latérale 12 de la barre de crémaillère 1.

De plus, la structure du piston selon l'invention telle que décrite ci-dessus permet une fabrication moins onéreuse, du fait que le corps de piston 5 est en matière plastique et peut donc être obtenu par moulage ou analogue, et que, de par les matières dans lesquels ils sont réalisés et de par leurs structures, l'assemblage du patin et du corps de piston peut être automatisé.

## Revendications

1. Poussoir de guidage d'une barre de crémaillère, lorsque la barre de crémaillère (1) présente au moins une portion de surface latérale (12) convexe cylindrique de révolution de rayon R et que cette barre est apte à se déplacer en translation le long et/ou en rotation autour de son axe de révolution (2), ledit poussoir comportant :
• une embase (3),
• un piston (4) comportant un corps de piston (5),
• un patin (6) comportant une surface de guidage (8) de forme sensiblement hémi cylindrique de révolution concave comportant au moins une partie de forme sensiblement complémentaire de ladite portion de surface latérale (12) de la barre de crémaillère (1),
• des moyens pour associer ledit patin avec ledit piston (4), et
• des moyens (10) pour exercer une force élastique entre ladite embase (3) et ledit corps de piston (5) de façon que la surface de guidage (8) du patin (6) soit apte à rester constamment en contact avec ladite portion de surface latérale (12) de la barre de crémaillère (1), **caractérisé par le fait que** ledit patin (6) est constitué d'une feuille de matériau à faible coefficient de frottement conformée de façon que la surface de guidage concave (8) comporte:
• une première zone centrale (14) sensiblement cylindrique de rayon R relativement rigide sensiblement centrée au sommet polaire (16) de ladite forme sensiblement hémi cylindrique de révolution concave,
• deux deuxième (18) et troisième (20) zones latérales de rayon R relativement rigides situées sensiblement symétriquement l'une de l'autre par rapport au plan polaire diamétral (22) passant par le sommet polaire (16), et
• deux quatrième (24) et cinquième (26) zones de liaison relativement souples reliant respectivement les deuxième et troisième zones latérales (18, 20) avec ladite première zone centrale (14).

2. Poussoir selon la revendication 1, **caractérisé par le fait que** ledit corps de piston (5) est réalisé en un matériau ayant un coefficient d'élasticité supérieur à celui de la matière dans laquelle est réalisée ladite feuille, et que ladite feuille est implantée dans une cavité (28) de forme générale sensiblement hémi cylindrique complémentaire de la face convexe de ladite feuille, ladite cavité étant réalisée dans ledit corps de piston.

3. Poussoir selon l'une des revendications 1 et 2, **caractérisé par le fait que** les deux zones de liaison souples (24, 26) sont constituées par des portions évidées de ladite feuille.

4. Poussoir selon l'une des revendications 1 et 2, **caractérisé par le fait que** les deux zones de liaison souples (24, 26) sont constituées par des portions amincies de ladite feuille.

5. Poussoir selon l'une des revendications 1 à 4, **caractérisé par le fait que** les moyens pour associer ledit patin avec ledit piston (4) sont constitués par des moyens pour fixer ledit patin avec ledit piston.

6. Poussoir selon les revendications 5 et 2 **caractérisé par le fait que** lesdits moyens pour fixer ledit patin avec ledit piston sont constitués par au moins une patte (30, 32, 34) solidaire du patin (6) en déport de celui-ci et un logement (36, 38, 40) réalisé dans ledit piston, ladite patte et ledit logement étant agencés l'un par rapport à l'autre de façon que, lorsque le patin (6) est positionné dans la cavité (28), la patte (30, 32, 34) s'enfiche en force dans ledit logement.

7. Poussoir selon les revendications 3 et 6, **caractérisé par le fait que** ladite patte (30, 32, 34) est obtenue par une découpe sensiblement en U dans ladite feuille, ladite découpe étant pliée pour former ladite patte en déport.

8. Poussoir selon les revendications 3 et 6, **caractérisé par le fait que** ladite patte (30, 32, 34) est obtenue par déformation par emboutissage de ladite feuille pour former ladite patte en déport.

9. Poussoir selon l'une des revendications 1 à 8, **caractérisé par le fait que** les parties du corps du piston (42, 44) bordant les deuxième et troisième zones latérales (18, 20) comportent des évidements (46, 48) pour donner à ces parties de piston (42, 44) une souplesse supérieure à celle des parties restantes du corps du piston (5).

10. Poussoir selon l'une des revendications 1 à 9, **caractérisé par le fait que** ledit corps de piston (5) présente une forme sensiblement cylindrique de révolution dont l'axe de révolution (49) est sensiblement contenu dans ledit plan polaire (22), et qu'il comporte une gorge circulaire (50) réalisée dans la paroi latérale cylindrique de révolution du corps du piston (5), une bague annulaire (52) en un matériau présentant un coefficient d'élasticité supérieur à celui du matériau dans lequel est réalisé ledit corps de piston (5), ladite bague annulaire ayant une épaisseur supérieure à la profondeur de ladite gorge et étant positionnée dans ladite gorge en étant centrée sur l'axe de révolution (49) du corps de piston.

11. Poussoir selon l'une des revendications 1 à 10, **caractérisé par le fait que** le matériau dans lequel est réalisé le corps de piston (5) est une matière plastique.

12. Poussoir selon l'une des revendications 1 à 11, **caractérisé par le fait que** ladite feuille est une feuille de bronze chargé d'un élément dopant tendant à diminuer le coefficient de frottement.

13. Poussoir selon l'une des revendications 1 à 12, **caractérisé par le fait que** ladite zone centrale (14) est définie sur environ cinquante degrés, que chacune des deux zones de liaison (24, 26) est définie sur environ quinze degrés, et que chacune des deux zones latérales (18, 20) est définie sur environ vingt degrés.

## Claims

1. A pusher for guiding a rack bar, for a rack bar (1) that presents at least one convex side surface portion (12) that is circularly cylindrical of radius R and that is suitable for moving in translation along and/or in rotation about its axis of symmetry (2), said pusher comprising:
· a base (3);
· a piston (4) including a piston body (5);
· a shoe (6) including a guide surface (8) of concave and substantially semi-cylindrical shape about an axis of symmetry, and including at least one portion of shape that is substantially complementary to said side surface portion (12) of the rack bar (1);
·means for associating said shoe with said piston (4); and
·means (10) for exerting a resilient force between said base (3) and said piston body (5) in such a manner that the guide surface (8) of the shoe (6) is suitable for remaining constantly in contact with said side surface portion (12) of the rack bar (1);
the pusher being **characterized by** the fact that said shoe (6) is constituted by a sheet of material having a low coefficient of friction and shaped in such a manner that the concave guide surface (8) comprises:
· a relatively rigid and substantially cylindrical central first zone (14) of radius R substantially centered on the polar vertex (16) of said concave and substantially semi-cylindrical shape;
· relatively rigid second and third zones (18, 20) of radius R on either side, situated substantially symmetrically relative to each other about the diametral polar plane (22) including the polar vertex (16); and
. relatively flexible fourth and fifth zones (24, 26) respectively connecting the second and third zones (18, 20) on either side with said central first zone (14).

2. A pusher according to claim 1, **characterized by** the facts that said piston body (5) is made of a material having a coefficient of elasticity that is greater than that of the material of which said sheet is made, and that said sheet is implanted in a cavity (28) of generally semi-cylindrical shape that is complementary to the convex face of said sheet, said cavity being made in said piston body.

3. A pusher according to claim 1 or claim 2, **characterized by** the fact that both of the flexible connection zones (24, 26) are constituted by hollowed-out portions of said sheet.

4. A pusher according to claim 1 or claim 2, **characterized by** the fact that both of the flexible connection zones (24, 26) are constituted by thinned portions of said sheet.

5. A pusher according to any one of claims 1 to 4, **characterized by** the fact that the means for associating said shoe with said piston (4) are constituted by means for securing said shoe to said piston.

6. A pusher according to claims 5 and 2, **characterized by** the fact that said means for securing said shoe to said piston are constituted by at least one tab (30, 32, 34) secured to the shoe (6) and projecting there from, together with a housing (36, 38, 40) made in said piston, said tab and said a housing being arranged relative to each other in such a manner that when the shoe (6) is positioned in the cavity (28), the tab (30, 32, 34) engages as a force fit in said housing.

7. A pusher according to claims 3 and 6, **characterized by** the fact that said tab (30, 32, 34) is obtained by a substantially U-shaped cutout in said sheet, said cutout being folded to form said projecting tab.

8. A pusher according to claims 3 and 6, **characterized by** the fact that said tab (30, 32, 34) is obtained by deforming said sheet by stamping to form said projecting tab.

9. A pusher according to any one of claims 1 to 8, **characterized by** the fact that the portions of the piston body (42, 44) on either side of the side, second and third zones (18, 20) include recesses (46, 48) to give flexibility to said piston portions (42, 44) greater than the flexibility of the remaining portions of the piston body (5).

10. A pusher according to any one of claims 1 to 9, **characterized by** the facts that said piston body (5) is of substantially circularly-cylindrical shape about an axis of symmetry (49) that is substantially contained in said polar plane (22), and that it includes both a circular groove (50) made in the circularly cylindrical side wall of the piston body (5) and an annular ring (52) of a material presenting a coefficient of elasticity that is greater than that of the material from which said piston body (5) is made, said annular ring being of a thickness greater than the depth of said groove and being positioned in said groove so as to be centered on the axis of symmetry (49) of the piston body.

11. A pusher according to any one of claims 1 to 10, **characterized by** the fact that the material from which the piston body (5) is made is a plastics material.

12. A pusher according to any one of claims 1 to 11, **characterized by** the fact that said sheet is a sheet of bronze doped with a doping element tending to decrease its coefficient of friction.

13. A pusher according to any one of claims 1 to 12, **characterized by** the facts that said central zone (14) is defined over about 50°, that each of the two connection zones (24, 26) is defined over about 15°, and that each of the two side zones (18, 20) is defined over about 20°.

## Patentansprüche

1. Druckstück zum Führen einer Zahnstange, wobei die Zahnstange (1) wenigstens einen rotationssymmetrischen, zylindrischen, konvexen seitlichen Oberflächenabschnitt (12) mit Radius R aufweist und wobei diese Stange sich translatorisch entlang ihrer und/oder rotatorisch um ihre Drehachse (2) verlagern kann, wobei das Druckstück umfasst:
- einen Sockel (3),
- einen Kolben (4), der einen Kolbenkörper (5) aufweist,
- eine Kufe (6), die eine Führungsoberfläche (8) mit einer konkaven, rotationssymmetrischen, im Wesentlichen halbzylindrischen Form, die wenigstens einen Teil mit einer zu dem seitlichen Oberflächenabschnitt (12) der Zahnstange (1) im Wesentlichen komplementären Form aufweist,
- Mittel zum Verbinden der Kufe mit dem Kolben (4) und
- Mittel (10) zum Ausüben einer elastischen Kraft zwischen dem Sockel (3) und dem Kolbenkörper (5), derart, dass die Führungsoberfläche (8) der Kufe (6) mit dem seitlichen Oberflächenabschnitt (12) der Zahnstange (1) ständig in Kontakt bleiben kann,
**dadurch gekennzeichnet, dass**
die Kufe (6) aus einem Blatt aus einem Material mit niedrigem Reibkoeffizienten gebildet ist, das so beschaffen ist, dass die konkave Führungsoberfläche (8) umfasst:
- eine erste, im Wesentlichen zylindrische mittlere Zone (14) mit Radius R, die verhältnismäßig starr ist und im Wesentlichen auf den polaren Scheitelpunkt (16) der konkaven, rotationssymmetrischen und im Wesentlichen halbzylindrischen Form zentriert ist,
- eine zweite, seitliche Zone (18) und eine dritte, seitliche Zone (20) mit Radius R, die verhältnismäßig starr sind und in Bezug auf die diametrale polare Ebene (12), die durch den polaren Scheitelpunkt (16) verläuft, im Wesentlichen symmetrisch zueinander angeordnet sind, und
- eine vierte Verbindungszone (24) und eine fünfte Verbindungszone (26), die verhältnismäßig elastisch sind und die zweite bzw. die dritte seitliche Zone (18, 20) mit der ersten mittleren Zone (14) verbinden.

2. Druckstück nach Anspruch 1, **dadurch gekennzeichnet, dass** der Kolbenkörper (5) aus einem Material verwirklicht ist, das einen Elastizitätskoeffizienten besitzt, der größer als jener des Materials ist, aus dem das Blatt verwirklicht ist, und dass das Blatt in einen Hohlraum (28) mit einer im Wesentlichen halbzylindrischen allgemeinen Form, die zu der konvexen Form des Blatts komplementär ist, eingesetzt ist, wobei der Hohlraum in dem Kolbenkörper verwirklicht ist.

3. Druckstück nach einem der Ansprüche 1 und 2, **dadurch gekennzeichnet, dass** die beiden elastischen Verbindungszonen (24, 26) durch in dem Blatt ausgesparte Abschnitte gebildet sind.

4. Stößel nach einem der Ansprüche 1 und 2, **dadurch gekennzeichnet, dass** die beiden elastischen Verbindungszonen (24, 26) durch verjüngte Abschnitte des Blatts gebildet sind.

5. Stößel nach einem der Ansprüche 1 bis 4, **dadurch gekennzeichnet, dass** die Mittel zum Verbinden der Kufe mit dem Kolben (4) durch Mittel zum Befestigen der Kufe an dem Kolben gebildet sind.

6. Stößel nach den Ansprüchen 2 und 5, **dadurch gekennzeichnet, dass** die Mittel zum Befestigen der Kufe an dem Kolben durch wenigstens eine mit der Kufe (6) versetzt fest verbundene Lasche (30, 32, 34) und durch einen in dem Kolben verwirklichten Aufnahmesitz (36, 38, 40) gebildet sind, wobei die Lasche und der Aufnahmesitz relativ zueinander in der Weise angeordnet sind, dass die Lasche (30, 32, 34) dann, wenn die Kufe (6) in dem Hohlraum (28) angeordnet ist, mit Kraft in den Aufnahmesitz eingepasst ist.

7. Stößel nach den Ansprüchen 3 und 6, **dadurch gekennzeichnet, dass** die Lasche (30, 32, 34) durch einen im Wesentlichen U-förmigen Zuschnitt in dem Blatt erhalten wird, wobei der Zuschnitt umgebogen ist, um die versetzte Lasche zu bilden.

8. Stößel nach den Ansprüchen 3 und 6, **dadurch gekennzeichnet, dass** die Lasche (30, 32, 34) durch Ziehformen des Blatts erhalten wird, um die versetzte Lasche zu bilden.

9. Stößel nach den Ansprüchen 1 bis 8, **dadurch gekennzeichnet, dass** die Teile des Kolbenkörpers (42, 44), die an die zweite und an die dritte seitliche Zone (18, 20) angrenzen, Aussparungen (46, 48) aufweisen, um diesen Teilen des Kolbens (42, 44) eine Elastizität zu verleihen, die größer als jene der verbleibenden Teile des Kolbenkörpers (5) ist.

10. Stößel nach einem der Ansprüche 1 bis 9, **dadurch gekennzeichnet, dass** der Kolbenkörper (5) eine im Wesentlichen rotationssymmetrische zylindrische Form aufweist, deren Drehachse (49) im Wesentlichen in der polaren Ebene (22) liegt, und dass er eine kreisförmige Nut (50), die in der rotationssymmetrischen zylindrischen Seitenwand des Kolbenkörpers (5) ausgebildet ist, sowie einen kreisförmigen Ring (52) aus einem Material, das einen Elastizitätskoeffizienten besitzt, der größer als jener des Materials ist, aus dem der Kolbenkörper (5) verwirklicht ist, umfasst, wobei der kreisförmige Ring eine Dicke besitzt, die größer als die Tiefe der Nut ist, und in dieser Nut positioniert ist, wobei er auf die Drehachse (49) des Kolbenkörpers zentriert ist.

11. Stößel nach einem der Ansprüche 1 bis 10, **dadurch gekennzeichnet, dass** das Material, aus dem der Kolbenkörper (5) verwirklicht ist, ein Kunststoff ist.

12. Stößel nach einem der Ansprüche 1 bis 11, **dadurch gekennzeichnet, dass** das Blatt ein mit einem Dotierstoff angereichertes Blatt aus Bronze ist, wobei der Dotierstoff den Reibkoeffizienten verringert.

13. Stößel nach einem der Ansprüche 1 bis 12, **dadurch gekennzeichnet, dass** die mittlere Zone (14) über etwa fünfzig Grad definiert ist, dass jede der zwei Verbindungszonen (24, 26) über etwa fünfzehn Grad definiert ist und dass jede der zwei seitlichen Zonen (18, 20) über etwa zwanzig Grad definiert ist.
